# EUROPÄISCHE PATENTSCHRIFT

(11) **EP 2 790 951 B1**
(45) Veröffentlichungstag und Bekanntmachung des Hinweises auf die Patenterteilung: **05.08.2015**
(21) Anmeldenummer: 12783913.2
(22) Anmeldetag: 22.10.2012
(51) Int. Cl.: B60K 26/02

(54) **FAHRPEDALSYSTEM FÜR EIN FAHRZEUG**
ACCELERATOR PEDAL SYSTEM FOR A VEHICLE
SYSTÈME PÉDALE D'ACCÉLÉRATEUR POUR UN VÉHICULE

(30) Priorität: 12.12.2011 DE 102011088275
(43) Veröffentlichungstag der Anmeldung: 22.10.2014
(73) Patentinhaber: Robert Bosch GmbH, 70442 Stuttgart (DE)
(72) Erfinder: SIEBER, Udo, 74321 Bietigheim (DE); RIESMUELLER, Klaus, 74906 Bad Rappenau (DE)
(86) Internationale Anmeldenummer: PCT/EP2012/070894
(87) Internationale Veröffentlichungsnummer: WO 2013/087273

(56) Entgegenhaltungen:
- DE-A1- 10 324 811
- US-A1- 2011 125 367

## Beschreibung

### Gebiet der Erfindung

Die Erfindung betrifft ein Fahrpedalsystem für ein Fahrzeug, das Fahrzeug, sowie ein Verfahren, ein Computerprogamm und ein computerlesbares Medium zum Steuern eines aktiven Fahrpedals.

### Hintergrund der Erfindung

Die Lebensdauer und Leistungsfähigkeit der Leistungselektronik eines Hybrid- oder Elektrofahrzeugs können stark vom Betriebstemperaturbereich abhängen, in dem die Leistungselektronik betrieben wird. Beispielsweise sollte vermieden werden, dass die Temperatur in der Leistungselektronik temporär über 150° C ansteigt.

Ähnlich verhält es sich bei der elektrischen Maschine des Antriebs des Fahrzeugs. Kommt es hier wegen einer zu starken Belastung zu einer Überhitzung der elektrischen Maschine, kann dies zu einer Entmagnetisierung der Dauermagnete führen. Das heißt die elektrische Maschine kann nachfolgend unter Umständen kein Drehmoment mehr aufbauen.

Wird eine Temperatur überschritten, ist es daher üblich zum Schutz der Leistungselektronik und der elektrischen Maschine die Leistung bei der Leistungselektronik bzw. bei der elektrischen Maschine automatisch zu begrenzen. Dies kann dann zu einem geringen Drehmomentabgabe bzw. einer geringeren Leistungsabgabe für den Antrieb führen.

Bei einem Hybrid-Fahrzeug kann diese Drehmomenteinbuße vom Verbrennungsmotor ausgeglichen werden. Erheblich kritischer kann eine solche Leistungseinbuße bei einem reinen Elektrofahrzeug sein, da die elektrische Maschine hier den alleinigen Antrieb darstellt. Dies kann unter Umständen bei einem Überholvorgang zu kritischen Verkehrssituationen führen.

Seit langem sind aktive Fahrpedale bekannt, die beispielsweise bei zu dichtem Auffahren vibrieren bzw. eine Gegenkraft zur Kraft des Fahrers aufbringen. Ein aktives Fahrpedal kann beispielsweise einen Stellmotor umfassen, der die Gegenkraft aufbringt. Der Stellmotor kann etwa in die Vorspannung der Pedalrückholfeder eingreifen. Ein aktives Fahrpedal ist in der DE 103 24 811 A1 beschrieben.

### Zusammenfassung der Erfindung

Es ist Aufgabe der Erfindung bei einem Fahrzeug sicherzustellen, dass kritische Bauteile nicht überhitzen. Damit kann beispielsweise verhindert werden, dass in die Leistung eines Elektrofahrzeugs eingegriffen werden muss.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein erster Aspekt der Erfindung betrifft ein Fahrpedalsystem für ein Fahrzeug, insbesondere ein Elektrofahrzeug, das beispielsweise mindestens einen elektrischen Antrieb umfasst.

Ein Fahrpedalsystem kann dabei ein aktives Fahrpedal (mit beispielsweise einem Stellmotor) und eine zugehörige Steuerung umfassen, die dazu ausgeführt ist, den Stellmotor und damit die vom Fahrpedal aufgebrachte Gegenkraft zu steuern.

Gemäß einer Ausführungsform der Erfindung umfasst das Fahrpedalsystem ein Fahrpedal zum Einstellen der Geschwindigkeit des Fahrzeugs durch einen Fahrer. Das Fahrpedal kann vom Fahrer des Fahrzeugs dazu verwendet werden, das Fahrzeug zu beschleunigen. Das Fahrpedalsystem umfasst eine Steuerung, die dazu ausgeführt ist ein Temperatursignal einer Komponente (und insbesondere einer elektrischen Komponente) des Fahrzeugs zu erfassen und das Fahrpedal anzusteuern. Das Fahrpedal ist dazu ausgeführt, beispielsweise aufgrund von Steuersignalen der Steuerung an den Stellmotor, eine (variable) Rückstellkraft bzw. Gegenkraft aktiv einzustellen. Mit anderen Worten kann das Fahrpedal eine Rückstellkrafteinstellvorrichtung, wie etwa einen Stellmotor, umfassen. Das Fahrpedal kann also als aktives Fahrpedal ausgeführt sein, d.h. es kann dem Fahrer abhängig vom Fahrzustand bzw. Fahrzeugzustand eine Rückmeldung zu geben.

Die Steuerung ist dazu ausgeführt, die Rückstellkraft in Abhängigkeit des Temperatursignals einzustellen. Beispielsweise kann die Steuerung dazu ausgeführt sein, die Rückstellkraft des Fahrpedals zu erhöhen, wenn das Temperatursignal beziehungsweise die durch dieses Signal kodierte Temperatur, eine Grenztemperatur überschreitet. Damit kann abhängig vom Temperaturzustand von elektrischen Komponenten des Elektrofahrzeugs, insbesondere von solchen des Antriebs wie etwa einem Inverter oder einer elektrische Maschine, ein aktives Fahrpedal angesteuert werden. Das Temperatursignal kann also die Temperatur eines Inverters und/oder eines elektrischen Antriebsmotors des Fahrzeugs kodieren.

Der Fahrer erhält so über das aktive Fahrpedal einen haptischen Hinweis, dass Komponenten des Fahrzeugs sich gerade überhitzten können. Ein Eingriffe über das Fahrpedal kann den Vorteil aufweisen, dass es nicht zu einer harten Leistungsreduktion kommen muss. Der Fahrer kann bei einem Überholvorgang immer noch das Fahrpedal überdrücken, um kritische Verkehrssituationen zu vermeiden.

Gemäß einer Ausführungsform der Erfindung wird das Temperatursignal von einem Sensor an der (elektrischen) Komponente erzeugt. Ein Temperatursensor kann beispielsweise im Inverter und/oder in der elektrischen Maschine angeordnet sein und ein Temperatursignal erzeugen, dass von der Steuerung verarbeitet werden kann.

Gemäß einer Ausführungsform der Erfindung ist die Steuerung dazu ausgeführt, das Temperatursignal zu simulieren. Alternativ oder zusätzlich zu Temperatursensoren kann die Steuerung auch die Temperatur in den (elektrischen) Komponenten indirekt bestimmen, beispielsweise indem die Temperatur über andere Größen, wie etwa der aktuelle Leistung der elektrischen Maschine oder dem aktuellen Stromfluss durch den Inverter, berechnet wird. Ein Temperatursignal, das Auskunft über den Temperaturzustand beispielsweise des Inverters gibt, kann also direkt erfasst und/oder auch aus anderen Signalen wie Drehmoment und Drehzahl simuliert bzw. berechnet werden.

Gemäß einer Ausführungsform der Erfindung ist die Steuerung dazu ausgeführt, die Rückstellkraft des Fahrpedals in Abhängigkeit vom Abstand des Temperatursignals zu der Grenztemperatur zu erhöhen. Die aktuelle Gegen- bzw. Rückstellkraft am Fahrpedal kann also von der Schwere der Temperaturbelastung abhängen. Die Kraft kann beispielsweis kontinuierlich mit schrumpfendem Abstand zur Grenztemperatur zunehmen. Auch ist es möglich, dass der Anstieg der Rückstellkraft in diskreten Sprüngen erfolgt.

Gemäß einer Ausführungsform der Erfindung ist die Steuerung dazu ausgeführt, die Rückstellkraft um einen ersten Betrag zu erhöhen, wenn das Temperatursignal eine erste Grenztemperatur überschreitet, und die Rückstellkraft um einen zweiten Betrag zu erhöhen, wenn das Temperatursignal eine zweite Grenztemperatur überschreitet. Nähert sich die Temperatur einer ersten kritischen Temperatur, so kann die Gegen- bzw. Rückstellkraft bereits um einen geringen ersten Betrag erhöht werden. Dem Fahrer wird damit angezeigt, dass er sich bereits in einem gefährdeten Bereich befindet. Damit kann eine Annäherung auf einen kritischen Temperaturbereich frühzeitig mit einer geringen Gegenkraft angezeigt werden.

Erhöht der Fahrer weiterhin die Antriebsleistung, so wird die Temperatur in der Regel weiter ansteigen und sich einer zweiten Grenztemperatur nähern. Nun wird die Gegen- bzw. Rückstellkraft ebenfalls weiterhin erhöht. Das heißt nun muss der Fahrer pro zunehmenden Pedalweg mehr Differenzkraft aufbringen.

Gemäß einer Ausführungsform der Erfindung ist die Steuerung dazu ausgeführt, das Fahrpedal zum Vibrieren anzuregen, wenn die Temperatur eine zweite Grenztemperatur überschreitet. Beispielsweise kann die Steuerung die Rückstellkraft mehrmals kurz ändern, so dass das Fahrpedal vibriert.

Ein weiterer Aspekt der Erfindung betrifft ein Fahrzeug mit einem Fahrpedalsystem so wie es obenstehend und untenstehend beschrieben ist, beispielsweise ein Elektrofahrzeug aber auch ein Hybridfahrzeug.

Gemäß einer Ausführungsform der Erfindung umfasst das Fahrzeug eine Anzeige, die dazu ausgeführt ist, anzuzeigen, dass das Einstellen oder Erhöhen der Rückstellkraft aufgrund einer Temperaturerhöhung oder -änderung im Fahrzeug erfolgt ist. Beispielsweise kann im Cockpit eine Warnlampe aktiviert werden, wenn dieses Ereignis eintritt. Der Eingriff auf das Fahrpedal bzw. der Grund für den Eingriff kann somit parallel auf einer Anzeige im Fahrzeug angezeigt werden.

Ein weiterer Aspekt der Erfindung betrifft ein Verfahren zum Steuern eines aktiven Fahrpedals eines Fahrzeugs. Dieses Verfahren kann beispielsweise von der Steuerung des Fahrpedalsystems durchgeführt werden.

Gemäß einer Ausführungsform der Erfindung umfasst das Verfahren die Schritte von: Erfassen eines Temperatursignals einer Komponente des Fahrzeugs; Einstellen oder Erhöhen der Rückstellkraft des Fahrpedals in Abhängigkeit von dem Temperatursignal, beispielsweise wenn das Temperatursignal bzw. die durch dieses Signal kodierte Temperatur eine Grenztemperatur überschreitet.

Dabei ist zu verstehen, dass Merkmale des Fahrpedalsystems und insbesondere Merkmale der Steuerung Merkmale des Verfahrens sein können und umgekehrt.

Ein weiterer Aspekt der Erfindung betrifft ein Computerprogamm, das, wenn es auf einem Prozessor ausgeführt wird, den Prozessor dazu anleitet, die Schritte des Verfahrens zum Steuern eines aktiven Fahrpedals durchzuführen. Ein weiterer Aspekt der Erfindung betrifft ein Computerlesbares Medium, auf dem ein derartiges Computerprogramm gespeichert ist. Beispielsweise kann die Steuerung des Fahrpedalsystems einen Prozessor und einen nicht-flüchtigen Speicher (ROM, EPROM usw.) umfassen, auf dem das Computerprogramm gespeichert ist.

### Kurze Beschreibung der Figuren

Im Folgenden werden Ausführungsbeispiele der Erfindung mit Bezug auf die beiliegenden Figuren detailliert beschrieben.
Fig. 1 zeigt schematisch ein Elektrofahrzeug gemäß einer Ausführungsform der Erfindung.
Fig. 2 zeigt ein Diagramm mit Rückstellkräften des Fahrpedals gemäß einer Ausführungsform der Erfindung.
Fig. 3 zeigt ein Flussdiagramm für ein Verfahren zum Steuern eines Fahrpedals gemäße einer Ausführungsform der Erfindung.

Grundsätzlich sind identische oder ähnliche Teile mit den gleichen Bezugszeichen versehen.

### Detaillierte Beschreibung von Ausführungsbeispielen

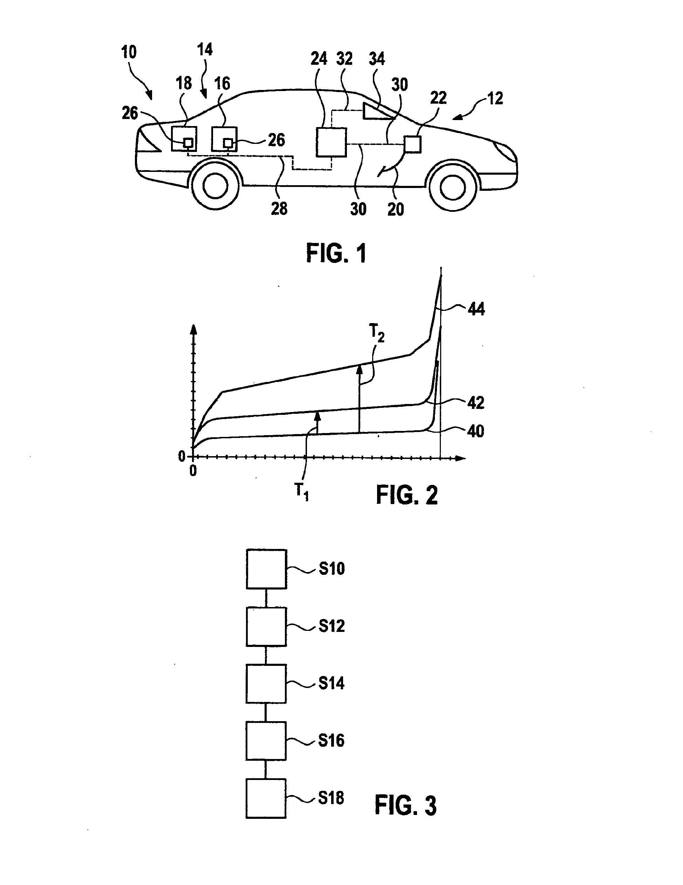

Fig. 1 zeigt schematisch ein Elektrofahrzeug 10 mit einem Fahrpedalsystem 12. Das Elektrofahrzeug umfasst weiter einen Antrieb 14 mit einem Inverter 16 und einer elektrischen Maschine 18, die vom Inverter 16 mit Strom aus einer Batterie versorgt werden kann.

Das Fahrpedalsystem 12 umfasst ein aktives Fahrpedal 20, dessen Rückstellkraft mit einem Stellmotor 22 einstellbar ist, und eine Steuerung 24, die den Stellmotor 22 ansteuern und somit die Rückstellkraft des Fahrpedals 20 einstellen kann. Durch mehrmaliges (kurzzeitiges) Verändern der Rückstellkraft kann das Fahrpedal 20 auch zum Vibrieren angeregt werden. Mit dem Fahrpedal 20 kann der Fahrer die Geschwindigkeit des Fahrzeugs 10 einstellen. Beispielsweise wird die aktuelle Stellung des Fahrpedals durch die Steuerung 24 erfasst und in eine Betriebsleistung umgerechnet, die der elektrischen Maschine 18 zugeführt werden soll.

Der Antrieb 14 und insbesondere der Inverter 16 und die elektrische Maschine 18 weisen Temperatursensoren 26 auf, die die Betriebstemperatur der betreffenden Komponente 16, 18 messen können.

Die Steuerung 24 ist dazu ausgeführt, die Temperatursignale 28, die von den Temperatursensoren 26 stammen, zu empfangen und auszuwerten. Überschreitet eines der Temperatursignale 26 eine Grenztemperatur, gibt die Steuerung 24 ein Steuersignal 30 an den Stellmotor 22 ab. Aufgrund des Steuersignals 30 wird die Rückstellkraft des Fahrpedals 20 erhöht. Gleichzeitig gibt die Steuerung 24 ein Signal 32 an eine Anzeige 34 des Fahrzeugs ab, die dann anzeigt, dass die Rückstellkraft aufgrund einer zu hohen Temperatur erhöht wurde.

Fig. 2 zeigt ein Diagramm mit Rückstellkräften 40, 42, 44 des Fahrpedals 20. Die Höhe der Rückstellkraft 40, 42, 44 ist im Diagramm nach oben und in Abhängigkeit vom Pedalweg nach rechts aufgetragen. In einem Grundzustand weist das Fahrpedal eine Grundkraft 40 auf, die abhängig vom Pedalweg ansteigt. Diese Grundkraft 40 wird beim Überschreiten einer ersten Grenztemperatur T1 um einen ersten Betrag auf eine erste erhöhte Rückstellkraft 42 und beim Überschreiten einer zweiten Grenztemperatur T2 um einen zweiten Betrag, der größer als der erste Betrag ist, auf eine zweite erhöhte Rückstellkraft 44 erhöht.

Weiter kann das Fahrpedal 20 beim Überschreiten der zweiten Grenztemperatur T2 zusätzlich oder alternativ vibrieren.

Fig. 3 zeigt ein Flussdiagramm für ein Verfahren zum Steuern des Fahrpedals 20 mit der Steuerung 24.

In einem Schritt S10 erfasst die Steuerung 24 die Temperatursignals 26 der elektrischen Komponenten 16, 18. Die Temperatursignale 28 können von einem Sensor 26 an den elektrischen Komponente 16, 18 stammen und/oder durch die die Steuerung 24 simuliert werden, also aus anderen Werten wie beispielsweise dem Drehmoment der elektrischen Maschine, berechnet werden.

In einem Schritt S12 ermittelt die Steuerung 24, ob wenigstens eines der Temperatursignale die erste Grenztemperatur T1 überschreitet. In diesem Fall erhöht die Steuerung 24 die Rückstellkraft um einen ersten Betrag auf die Rückstellkraft 42. Dies geschieht durch Senden eines entsprechenden Steuersignals 30 an das aktive Fahrpedal 20.

In einem Schritt S14 sendet die Steuerung ein Signal 32 an die Anzeige 34, die dann beispielsweise im Cockpit des Fahrzeugs 10 anzeigt, dass aufgrund einer Temperaturerhöhung die Rückstellkraft erhöht wurde.

In einem Schritt S16 ermittelt die Steuerung 24, ob wenigstens eines der Temperatursignale die zweite Grenztemperatur T2 überschreitet. In diesem Fall erhöht die Steuerung 24 die Rückstellkraft um den zweiten Betrag auf die Rückstellkraft 44. Auch dies geschieht durch Senden eines entsprechenden Steuersignals 30 an das aktive Fahrpedal 20.

In einem Schritt S18, empfängt die Steuerung 24 weitere Temperatursignale 28 von den Komponenten 16, 18 und ermittelt (auch über eine indirekte Berechnung), dass die die Temperatur unter die Grenztemperatur T1 gesunken ist. Die Steuerung 24 sendet dann ein Steuersignal 30 an das aktive Fahrpedal 20, das die Rückstellkraft wieder auf den Grundwert zurückstellt 40. Auch die Anzeige 34 wird durch ein entsprechendes Signal der Steuerung 24 wieder zurückgesetzt.

## Patentansprüche

1. Fahrpedalsystem (12) für ein Fahrzeug (10), umfassend:
ein Fahrpedal (20) zum Einstellen der Geschwindigkeit des Fahrzeugs (10) durch einen Fahrer;
eine Steuerung (24), die dazu ausgeführt ist mindestens ein Temperatursignal von mindestens einer Komponente (16, 18) des Fahrzeugs (10) zu erfassen und das Fahrpedal (20) anzusteuern;
wobei das Fahrpedal (20) dazu ausgeführt ist, eine Rückstellkraft einzustellen;
**dadurch gekennzeichnet, dass** die Steuerung (24) dazu ausgeführt ist, die Rückstellkraft in Abhängigkeit des Temperatursignals einzustellen.

2. Fahrpedalsystem (12) nach Anspruch 1,
wobei die Komponente (16, 18), deren Temperatursignal erfasst wird, eine elektrische Komponente des Fahrzeugs umfasst.

3. Fahrpedalsystem (12) nach Anspruch 1 oder 2,
wobei das Temperatursignal (28) die Temperatur eines Inverters (16) und/oder eines elektrischen Antriebsmotors (18) des Fahrzeugs (10) kodiert.

4. Fahrpedalsystem (12) nach einem der vorhergehenden Ansprüche,
wobei das Temperatursignal (28) von mindestens einem Sensor (26) an der elektrischen Komponente (16, 18) erzeugt wird.

5. Fahrpedalsystem (12) nach einem der vorhergehenden Ansprüche,
wobei die Steuerung (24) dazu ausgeführt ist, das Temperatursignal zu simulieren.

6. Fahrpedalsystem (12) nach einem der vorhergehenden Ansprüche,
wobei die Steuerung (24) dazu ausgeführt ist, die Rückstellkraft des Fahrpedals (20) zu erhöhen, wenn das Temperatursignal eine Grenztemperatur überschreitet.

7. Fahrpedalsystem (12) nach Anspruch 6,
wobei die Steuerung (24) dazu ausgeführt ist, die Rückstellkraft in Abhängigkeit vom Abstand des Temperatursignals zur Grenztemperatur zu erhöhen.

8. Fahrpedalsystem (12) nach einem der vorhergehenden Ansprüche,
wobei die Steuerung (24) dazu ausgeführt ist, die Rückstellkraft um einen ersten Betrag zu erhöhen, wenn das Temperatursignal eine erste Grenztemperatur (T1) überschreitet, und/oder
wobei die Steuerung (24) dazu ausgeführt ist die Rückstellkraft um einen zweiten Betrag zu erhöhen und/oder das Fahrpedal zum Vibrieren anzuregen, wenn das Temperatursignal eine zweite Grenztemperatur (T2) überschreitet.

9. Fahrzeug (10) mit einem Fahrpedalsystem (12) nach einem der vorhergehenden Ansprüche.

10. Fahrzeug (10) nach Anspruch 9,
wobei das Fahrzeug eine Anzeige (24) umfasst, die dazu ausgeführt ist, anzuzeigen, dass das Einstellen der Rückstellkraft aufgrund einer Temperaturänderung im Fahrzeug (10) erfolgt ist.

11. Verfahren zum Steuern eines aktiven Fahrpedals (20) eines Fahrzeugs (10), umfassend die Schritte:
Erfassen eines Temperatursignals (28) einer Komponente (16, 18) des Fahrzeugs (10);
Einstellen einer Rückstellkraft des Fahrpedals (20) in Abhängigkeit von dem Temperatursignal.

12. Verfahren nach Anspruch 11, weiter umfassend den Schritt:
Erhöhen der Rückstellkraft um einen ersten Betrag, wenn das Temperatursignal eine erste Grenztemperatur (T1) überschreitet;
Erhöhen der Rückstellkraft um einen zweiten Betrag und/oder Anregen des Fahrpedals zum Vibrieren, wenn das Temperatursignal eine zweite Grenztemperatur (T2) überschreitet.

13. Computerprogamm, das, wenn es auf einem Prozessor ausgeführt wird, den Prozessor dazu anleitet, die Schritte des Verfahrens nach Anspruch 11 oder 12 auszuführen.

14. Computerlesbares Medium, auf dem ein Computerprogramm nach Anspruch 13 gespeichert ist.

## Claims

1. Accelerator pedal system (12) for a vehicle (10), comprising:
an accelerator pedal (20) for the speed of the motor vehicle (10) to be adjusted by a driver;
a controller (24) which is designed to detect at least one temperature signal from at least one component (16, 18) of the vehicle (10) and to actuate the accelerator pedal (20);
wherein the accelerator pedal (20) is designed to adjust a restoring force;
**characterized in that** the controller (24) is designed to adjust the restoring force depending on the temperature signal.

2. Accelerator pedal system (12) according to Claim 1,
wherein the component (16, 18), of which the temperature signal is detected, comprises an electrical component of the vehicle.

3. Accelerator pedal system (12) according to Claim 1 or 2,
wherein the temperature signal (28) encodes the temperature of an inverter (16) and/or of an electric drive motor (18) of the vehicle (10).

4. Accelerator pedal system (12) according to one of the preceding claims,
wherein the temperature signal (28) is generated by at least one sensor (26) on the electrical component (16, 18).

5. Accelerator pedal system (12) according to one of the preceding claims,
wherein the controller (24) is designed to simulate the temperature signal.

6. Accelerator pedal system (12) according to one of the preceding claims,
wherein the controller (24) is designed to increase the restoring force of the accelerator pedal (20) when the temperature signal exceeds a limit temperature.

7. Accelerator pedal system (12) according to Claim 6,
wherein the controller (24) is designed to increase the restoring force depending on the difference between the temperature signal and the limit temperature.

8. Accelerator pedal system (12) according to one of the preceding claims,
wherein the controller (24) is designed to increase the restoring force by a first amount when the temperature signal exceeds a first limit temperature (T1), and/or wherein the controller (24) is designed to increase the restoring force by a second amount and/or to cause the accelerator pedal to vibrate when the temperature signal exceeds a second limit temperature (T2).

9. Vehicle (10) having an accelerator pedal system (12) according to one of the preceding claims.

10. Vehicle (10) according to Claim 9,
wherein the vehicle comprises a display (34) which is designed to display that the restoring force is being adjusted on account of a change in temperature in the vehicle (10).

11. Method for controlling an active accelerator pedal (20) of a vehicle (10), comprising the steps of:
detecting a temperature signal (28) of a component (16, 18) of the vehicle (10);
adjusting a restoring force of the accelerator pedal (20) depending on the temperature signal.

12. Method according to Claim 11, further comprising the step of:
increasing the restoring force by a first amount when the temperature signal exceeds a first limit temperature (T1);
increasing the restoring force by a second amount and/or causing the accelerator pedal to vibrate when the temperature signal exceeds a second limit temperature (T2).

13. Computer program which, when run on a processor, instructs the processor to carry out the steps of the method according to Claim 11 or 12.

14. Computer-readable medium in which a computer program according to Claim 13 is stored.

## Revendications

1. Système de pédale d'accélérateur (12) pour un véhicule (10), comprenant :
une pédale d'accélérateur (20) pour régler la vitesse du véhicule (10) par le biais d'un conducteur ;
une commande (24) réalisée pour détecter au moins un signal de température provenant d'au moins un composant (16, 18) du véhicule (10) et pour commander la pédale d'accélérateur (20) ;
la pédale d'accélérateur (20) étant réalisée pour régler une force de rappel ;
**caractérisé en ce que** la commande (24) est réalisée pour régler la force de rappel en fonction du signal de température.

2. Système de pédale d'accélérateur (12) selon la revendication 1, le composant (16, 18) dont le signal de température est détecté comprenant un composant électrique du véhicule.

3. Système de pédale d'accélérateur (12) selon la revendication 1 ou 2, le signal de température (28) codant la température d'un inverseur (16) et/ou d'un moteur électrique d'entraînement (18) du véhicule (10).

4. Système de pédale d'accélérateur (12) selon l'une quelconque des revendications précédentes, le signal de température (28) étant produit par au moins un capteur (26) prévu au niveau du composant électrique (16, 18).

5. Système de pédale d'accélérateur (12) selon l'une quelconque des revendications précédentes, la commande (24) étant réalisée pour simuler le signal de température.

6. Système de pédale d'accélérateur (12) selon l'une quelconque des revendications précédentes, la commande (24) étant réalisée pour accroître la force de rappel de la pédale d'accélérateur (20) lorsque le signal de température dépasse une température limite.

7. Système de pédale d'accélérateur (12) selon la revendication 6, la commande (24) étant réalisée pour accroître la force de rappel en fonction de l'écart du signal de température par rapport à la température limite.

8. Système de pédale d'accélérateur (12) selon l'une quelconque des revendications précédentes ;
la commande (24) étant réalisée pour accroître la force de rappel d'une première somme lorsque le signal de température dépasse une première température limite (T1) ; et/ou
la commande (24) étant réalisée pour accroître la force de rappel d'une deuxième somme et/ou pour exciter la pédale d'accélérateur afin de la faire vibrer lorsque le signal de température dépasse une deuxième température limite (T2).

9. Véhicule (10) avec un système de pédale d'accélérateur (12) selon l'une quelconque des revendications précédentes.

10. Véhicule (10) selon la revendication 9, le véhicule comprenant un affichage (34) réalisé pour afficher que le réglage de la force de rappel se produit sur la base d'une variation de température observée dans le véhicule (10).

11. Procédé de commande d'une pédale d'accélérateur (20) active d'un véhicule (10), comprenant les étapes suivantes :
détection d'un signal de température (28) d'un composant (16, 18) du véhicule (10) ;
réglage d'une force de rappel de la pédale d'accélérateur (20) en fonction du signal de température.

12. Procédé selon la revendication 11, comprenant en outre les étapes suivantes :
accroissement de la force de rappel d'une première somme lorsque le signal de température dépasse une première température limite (T1) ;
accroissement de la force de rappel d'une deuxième somme et/ou excitation de la pédale d'accélérateur pour la faire vibrer lorsque le signal de température dépasse une deuxième température limite (T2).

13. Programme informatique qui, lorsqu'il est exécuté sur un processeur, code le processeur pour réaliser les étapes du procédé selon la revendication 11 ou 12.

14. Support lisible, par ordinateur sur lequel un programme informatique selon la revendication 13 est mémorisé.
